# EUROPÄISCHE PATENTSCHRIFT

(11) **EP 1 287 961 B1**
(45) Veröffentlichungstag und Bekanntmachung des Hinweises auf die Patenterteilung: **24.03.2010**
(21) Anmeldenummer: 02018755.5
(22) Anmeldetag: 22.08.2002
(51) Int. Cl.: B29C 44/56, B29C 44/06

(54) **Verfahren zum Herstellen von mehrlagigen Verkleidungsteilen**
Method for making a multilayer trim component
Procédé de fabrication d'un élément de revêtement multicouche

(30) Priorität: 04.09.2001 DE 10144027; 20.03.2002 DE 10212450
(43) Veröffentlichungstag der Anmeldung: 05.03.2003
(73) Patentinhaber: Herbert Olbrich GmbH & Co. KG, 46395 Bocholt (DE)
(72) Erfinder: Spengler, Gerd, 60388 Frankfurt (DE)
(74) Vertreter: Patentanwälte Buse, Mentzel, Ludewig

(56) Entgegenhaltungen:
- EP-A- 0 993 937
- WO-A-00/74928
- DE-A- 3 722 873
- US-A- 5 401 449

## Beschreibung

Die Erfindung betrifft ein Verfahren zum Herstellen von mehrlagigen, thermoplastischen Kunststoff aufweisenden Verkleidungsteilen gemäß Anspruch 1..

Es ist bekannt, Verkleidungsteile für Kraftfahrzeuge wie zum Beispiel Türinnenverkleidungsteile, Instrumententafeln oder Konsolen aus mehreren einzelnen Lagen herzustellen, wobei eine dünnwandige, tragende Schicht und auf dieser mindestens eine Schicht aus Dekormaterial und dazwischen an mindestens einer definierten Stelle ein weichelastisches Teil wie zum Beispiel ein aus Kunststoffschaum bestehendes Teil vorgesehen sind. Es sind ferner verschiedene Verfahren zum Herstellen derartiger Verkleidungsteile bekannt, wobei jeweils mehrere Arbeitsschritte durchgeführt werden müssen und ferner zusätzlich verwendete Komponenten entweder aus stilistischen Gründen oder wegen mangelnder Umweltfreundlichkeit nachteilig oder zumindest problematisch sind. So werden zum Beispiel stabile, flächige Trageteile zunächst aus Kunststoff im Spritzgußverfahren oder im Pressformverfahren aus Holzfasern bzw. aus Naturfasern und dergleichen hergestellt. Nachdem das Trageteil angefertigt ist, werden Schaumstoffteile an einer oder mehreren, genau definierten Stellen plaziert und mit Klebstoff gehalten, wobei das komplette Trageteil mit Klebstoff beschichtet ist. Dieses Teil wird sodann mit einem Dekormaterial im Vakuum- oder Pressverfahren laminiert. Nachteilig ist hier, daß vier Arbeitsgänge benötigt werden und daß auch Klebstoffe verwendet werden müssen, die nicht umweltfreundlich sind. Außerdem ist das Schaumstoffteil auf der Sichtseite durch eine Abstufung in der Dekorkontur zu erkennen, was stilistisch als nachteilig empfunden wird.

Ferner ist es bekannt, auf ein zuerst fertiggestelltes Trageteil partiell Kunststoffschaum mit Hilfe eines Schäumverfahrens direkt aufzuschäumen. Danach wird das Trageteil mit Klebstoff beschichtet und in einem Laminiervorgang wird schließlich Dekormaterial aufgebracht. Von Vorteil ist bei diesem Verfahren, daß die Schaumauflage bzw. die Schaumstoffschicht die gewünschte Kontur besitzen kann, so daß ein Übergang vom Schaumstoff zu dem flächigem Trageteil nach der Fertigstellung nicht als Stufe zu erkennen ist. Nachteilig ist jedoch die Vielzahl der hier erforderlichen Arbeitsgänge. Außerdem sind zum Aufschäumen des Schaumteiles zusätzliche, teure Mehrfachwerkzeuge erforderlich und das Schäumverfahren nimmt wegen unterschiedlich langer Arbeitstakte wesentlich mehr Zeit in Anspruch als andere Herstellungsverfahren. Verbunden hiermit sind schließlich auch noch hohe Investitionskosten für die Schäumanlage.

Aus dem Dokument WO 00/74928 A ist ein Verfahren zur Herstellung eines Verkleidungsteiles aus mehrlagigem, thermoplastischem Kunststoff bekannt. Für dieses Verkleidungsteil wird eine Tragschicht, eine Dekorschicht und eine zwischen diesen angeordnete aus thermoplastischem Kunststoff bestehende Schaumstoffschicht verwendet.

Der Ereindung liegt daher die Aufgabe zugrunde, ein Verfahren anzugeben, mit dessen Hilfe es möglich ist, Teile der hier interessierenden Art ohne hohe Investitionskosten sowie mit geringen, laufenden Kosten herzustellen, wobei ferner das fertige Produkt ein optisch einwandfreies Aussehen und optimale technische Eigenschaften besitzt.

Diese Aufgabe wird mit den Merkmalen des Anspruches 1 gelöst.

Erreicht wird dies in Weiterbildung der Erfindung dadurch, daß als thermoplastischer Kunststoff sowohl für die Schaumstoffschicht als auch für den Schaumstoffzuschnitt jeweils Polyolefinschaum verwendet wird, wobei die Schaumstoffschicht an der Dekorschicht eine höhere Temperaturbeständigkeit und/oder eine höhere Raumdichte als der Schaumstoffzuschnitt aufweist. Die unterschiedlichen Materialeigenschaften führen dazu, daß sich nur der Schaumstoffzuschnitt aufgrund der von der Trageschicht zugeführten Wärme und des vom Presswerkzeug stammenden Druckes in der gewünschten Weise mit mindestens einem allmählich auslaufenden Randteil verformt, während die anderen Teile bzw. Schichten nur die vom Presswerkzeug vorgegebene Kontur einnehmen.

Die Vorrichtung zum Herstellen des besagten Kunststoffteiles umfaßt ein Presswerkzeug mit mindestens einer Oberform und mit mindestens einer Unterform, die vor und während des Verbindens des weichelastischen Schaumstoffzuschnittes mit dem flächigen Trageteil keine Wärme auf die zu verbindenden und umzuformenden Teile übertragen. Die notwendige Wärme zum Anschmelzen der Kontaktflächen und zum Herstellen des bzw. der auslaufenden Randteile des weichelastischen Schaumstoffzuschnittes rührt ausschließlich von der Wärme her, die das flächige Trageteil in einer vorgeschalteten Heizeinrichtung, das heißt zum Beispiel in einer Kontaktheizung oder mittels Infrarotstrahler und/oder durch Heißluft erhält. Der als weichelastisches Innenteil dienende Schaumstoffzuschnitt ist vorzugsweise ein Polyolefin-Stanzteil, das lagegenau in dem Presswerkzeug zwischen Oberform und Unterform plaziert wird. Vorzugsweise wird dabei sowohl das auf zum Beispiel 200 Grad C erwärmte Trageteil als auch der weichelastische Schaumstoffzuschnitt in dem Presswerkzeug vor dem Schließen von Oberform und Unterform jeweils im Abstand voneinander und von den beiden Formteilen angeordnet. Das flächige Trageteil und der an der Schaumstoffschicht befindliche, weichelastische Schaumstoffzuschnitt werden zwischen den beiden Formhälften lagegenau aufgespannt und verformen sich in der gewünschten Weise beim Schließen von Oberform und Unterform. Die flächige Trageschicht besteht ihrerseits zweckmäßigerweise aus Naturfasern und einem als Bindemittel dienenden, thermoplastischen Kunststoff, wozu zum Beispiel Polypropylen-Fasern als Ausgangswerkstoff dienen.

Weiterbildungen und besondere Ausgestaltungen der Erfindung gehen aus Unteransprüchen und der Beschreibung in Verbindung mit der Zeichnung hervor.

Die Erfindung wird nachstehend anhand von Ausführungsbeispielen, die in der Zeichnung dargestellt ist, näher beschrieben..Dabei zeigen:
- Fig. 1:: einen abgebrochenen Schnitt durch ein Innenverkleidungsteil;
- Fig. 2:: einen Schnitt wie in Fig. 1 durch ein abgewandeltes Ausführungsbeispiel;
- Fig. 3:: schematisch sowie im Schnitt eine Seitenansicht von wesentlichen Komponenten der Vorrichtung;
- Fig. 4:: im gleichen Maßstab sowie abgebrochen eine Ansicht mit Teilen der Bestückungseinrichtung in Draufsicht;
- Fig. 5:: das Oberwerkzeug und das Unterwerkzeug in geöffnetem Zustand sowie in größerem Maßstab schematisch und im Schnitt als Einzelheit aus Fig. 3;
- Fig. 6:: eine Ansicht des Presswerkzeuges wie in Fig. 5 in geschlossenem Zustand;
- Fig. 7:: in größerem Maßstab als in Fig. 3 das Presswerkzeug in geöffnetem Zustand zusammen mit weiteren Komponenten der Vorrichtung und
- Fig. 8:: eine Ansicht wie in Fig. 5 von einem abgewandelten Press-werkzeug.

Ein mehrlagiges, zumindest überwiegend aus Kunststoff bestehendes Verkleidungsteil, bei dem es sich insbesondere um ein Innenverkleidungsteil 1 für ein Kraftfahrzeug wie zum Beispiel eine Kraftfahrzeugtürabdeckung mit einer Armlehne handelt, umfaßt eine Dekorschicht 2 und eine aufkaschierte Schaumstoffschicht 3 sowie eine dem Innenverkleidungsteil 1 die notwendige Formstabilität verleihende Trageschicht 4. Die Trageschicht 4 besteht zum Beispiel aus Naturfasern und thermoplastischem Kunststoff als Bindemittel.

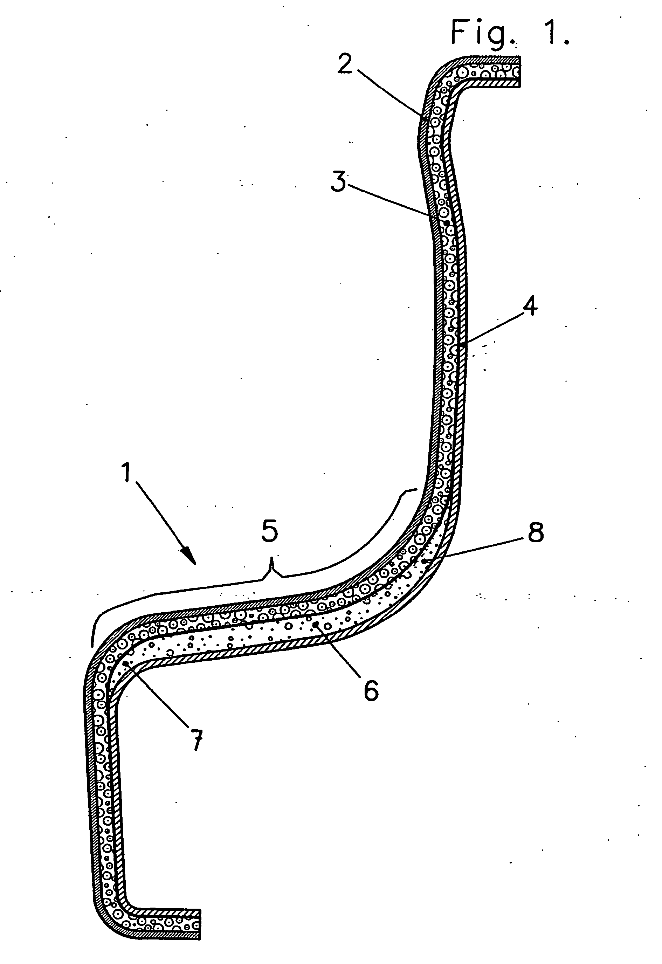

Das Innenverkleidungsteil 1 weist einen Bereich 5 zum Beispiel im Armlehnenbereich mit größerer Weichheit und/oder Stoß-Absorptionsfähigkeit bzw. mit einer größeren Materialstärke auf. Gebildet wird dieser Bereich 5 mit Hilfe eines umgeformten Schaumstoffzuschnittes 6, der gemäß dem in Fig. 1 dargestellten Ausführungsbeispiel Randteile 7 und 8 aufweist, die kontinuierlich und allmählich in das Niveau der Schaumstoffschicht 3 übergehen. Die Randteile 7 und 8 verjüngen sich dazu keilförmig bzw. im Querschnitt spitzwinklig, wobei die Form und Gestalt dieser Verjüngung auch unterschiedlich sein kann.

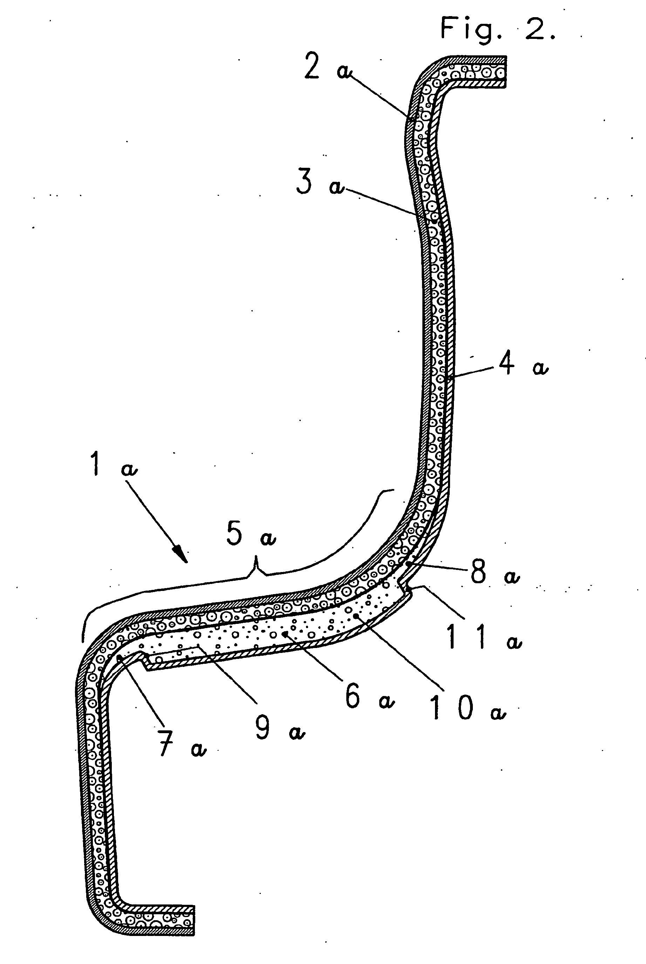

Ein abgewandeltes Ausführungsbeispiel eines Innenverkleidungsteiles 1a ist in Fig. 2 dargestellt, wobei grundsätzlich gleiche Teile dieselben Bezugszahlen und zusätzlich den Buchstabenindex a aufweisen.

Auch das Innenverkleidungsteil 1a umfaßt eine Dekorschicht 2a mit einer als Dekorrücken dienenden Schaumstoffschicht 3a und eine Trageschicht 4a. Zur partiellen Gestaltung eines besonders weichen Bereiches 5a im Armlehnenbereich ist ein Schaumstoffzuschnitt 6a vorgesehen, der ebenfalls spitzwinklig auslaufende Randteile 7a und 8a aufweist. Diese Randteile 7a und 8a schließen jedoch jeweils mit einer Stufe 9a an das Mitteilteil 10a des Schaumstoffzuschnittes 6a an (Fig. 2). Entsprechend weist auch das Trageteil 4a eine als Übergang dienende Stufe 11a auf.

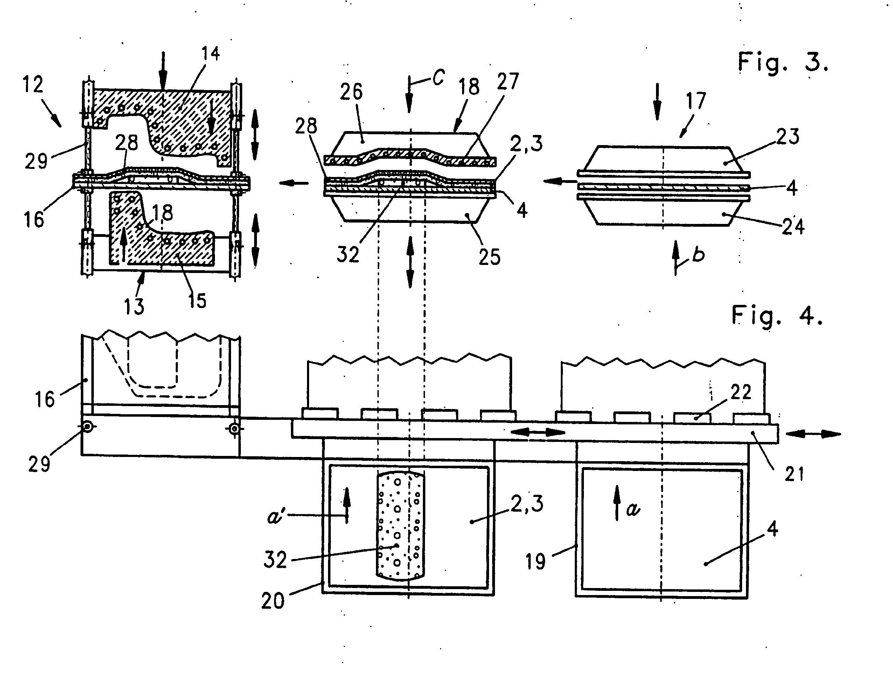

Zur Herstellung des Innenverkleidungsteiles 1 bzw. 1a ist eine Vorrichtung 12 vorgesehen, die ein Presswerkzeug 13 mit einer Oberform 14 und einer Unterform 15 umfaßt. Zu der Vorrichtung 12 gehören ferner ein beweglich gelagerter Spannrahmen 16 sowie Heizeinrichtungen 17 und 18 und Bestückungseinrichtungen 19 und 20. Eine Transporteinrichtung 21 mit Materialgreifern 22 entnimmt die Trageschicht 4 der Bestückungseinrichtung 19 und transportiert sie in die Heizeinrichtung 17, wie dies mit Hilfe von Pfeilen a und b in Fig. 4 veranschaulicht ist. Die Heizeinrichtung 17 besteht gemäß dem in Fig. 3 dargestellten Ausführungsbeispiel aus einem Oberteil 23 und einem Unterteil 24, die eine Temperatur von ca. 200 Grad C aufweisen und zwischen denen die Trageschicht 4 entsprechend erwärmt wird. Aus der Heizeinrichtung 17 wird die Trageschicht 4 in die Heizeinrichtung 18 mit Hilfe der Transporteinrichtung 21 während eines weiteren Arbeitstaktes transportiert und dort auf dem Unterteil 25 abgelegt. Ferner werden ein auf der Schaumstoffschicht 3 angeordneter zu verformender Rohling 32 für den Schaumstoffzuschnitt 6 zusammen mit der auf ihnen liegenden Dekorschicht 2 aus der Bestückungseinrichtung 20 mit Hilfe einer in den Fig.en nicht dargestellten Transporteinrichtung in Richtung des Pfeiles a' ebenfalls in die Heizeinrichtung 18 transportiert und dort auf der Trageschicht 4 abgelegt.

Daraufhin schließt die Heizeinrichtung 18, wobei sich deren Oberteil 26 in Richtung des Pfeiles c bewegt.

Mindestens das Oberteil 26 der Heizeinrichtung 18 weist Leitungen 27 für eine temperierte Flüssigkeit wie zum Beispiel Wasser auf. Die Temperatur beträgt ca. 80 Grad C.

Das Unterteil 25 der Heizeinrichtung 18 weist während des Heizvorganges ebenso wie die Heizeinrichtung 17 eine Temperatur von ca. 200 Grad C auf und überträgt die Wärme unmittelbar auf die Trageschicht 4. Die Wärme dient dazu, um ein Abkühlen der aus der Heizeinrichtung 17 kommenden Trageschicht 4 zu verhindern.

Aus der Heizeinrichtung 18 wird das aus Trageschicht 4, Schaumstoffzuschnitt 6 sowie Schaumstoffschicht 3 und Dekorschicht 2 bestehende Sandwich-Paket 28 mit Hilfe einer in den Fig.en ebenfalls nicht dargestellten Transporteinrichtung an den zu dem Presswerkzeug 13 gehörenden Spannrahmen 16 abgegeben, der daraufhin das Sandwich-Paket 28 zwischen der Oberform 17 und der Unterform 15 hält, wie dies in Fig. 3 dargestellt ist. Daraufhin bewegen sich die Oberform 14 und die Unterform 15 des Presswerkzeuges 13 in Richtung der Pfeile aufeinander zu, wobei auch die Trageteile 29 des Spannrahmens 16 ihre Lage verändern.

Sowohl die Heizeinrichtungen 17 und 18 als auch die Bestückungseinrichtungen 19 und 20 und die Transporteinrichtung 21 mit ihren Materialgreifern 22 und der Spannrahmen 16 mit seinen Trageteilen 29 sind Stand der Technik und aus diesem Grund handelsübliche Komponenten der Vorrichtung 12. Ihre Funktion und ihre Einzelheiten bedürfen daher keiner weiteren Erklärung und sind auch nicht Gegenstand eines angestrebten Schutzes.

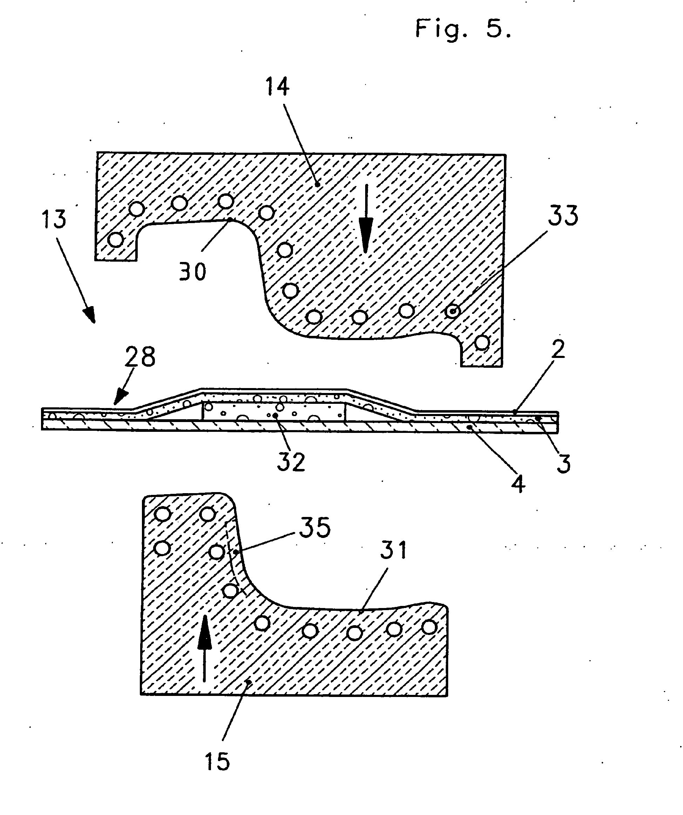

Sobald sich das Sandwich-Paket 28 im Presswerkzeug 14 befindet, bewegen sich dessen Oberteil 14 und Unterteil 15 in Richtung der Pfeile aufeinander zu und verformen das Sandwich-Paket 28 mit der auf ca. 200 Grad erwärmten Trageschicht 4 entsprechend ihren Konturen 30 und 31. Ferner erfolgt eine thermoplastische Verschmelzung zwischen den verschiedenen Teilen des Sandwich-Pakets 28 sowie eine Verformung des Schaumstoffzuschnittes 6, der im Ausgangszustand als Rohling 32 eine im Querschnitt rechteckige Kontur gemäß den Fig. 3 und 5 besitzt.

Sowohl die Oberform 14 als auch die Unterform 15 weisen zweckmäßigerweise Bohrungen 33 für ein Strömungsmedium auf, das während des Herstellungsvorganges Wärme abführt.

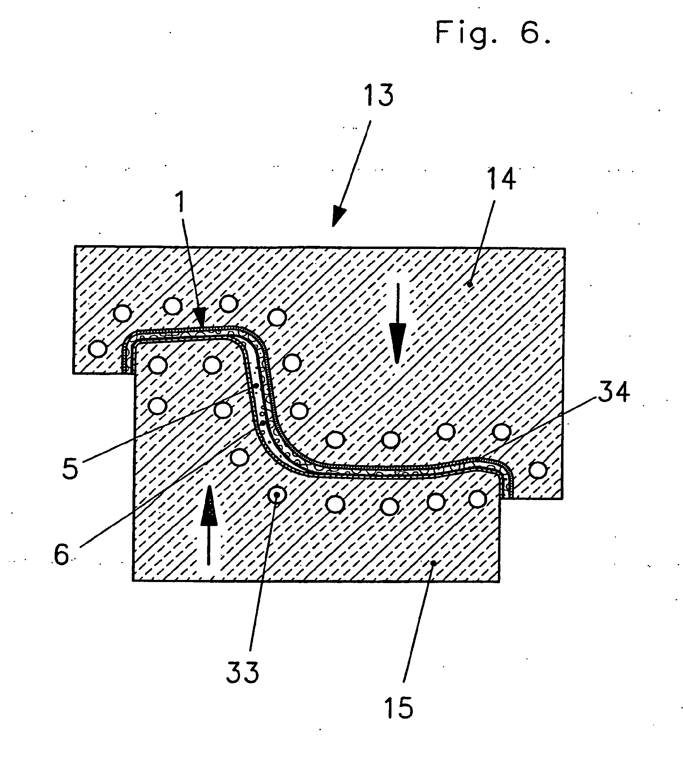

Der geschlossene Zustand des Presswerkzeuges 13 ist in Fig. 6 dargestellt. Mit Hilfe der beiden Konturen 30 und 31 von Oberform 14 und Unterform 15 wird ein Werkzeugspalt 34 gebildet, in dem sich die verschiedenen Schichten des Innenverkleidungsteiles 1 befinden. Im Bereich 5 ist der Werkzeugspalt 34 um das Maß des verformten, zusätzlich vorgesehenen Schaumstoffzuschnittes 6 breiter (Fig. 6). Von diesem breiteren Teil des Werkzeugspaltes 34 laufen die Konturen 30 und 31 der beiden Werkzeughälften kontinuierlich aufeinander zu und besitzen außerhalb des Bereiches 5 eine Lage derart, daß der Werkzeugspalt 34 überall gleich breit ist.

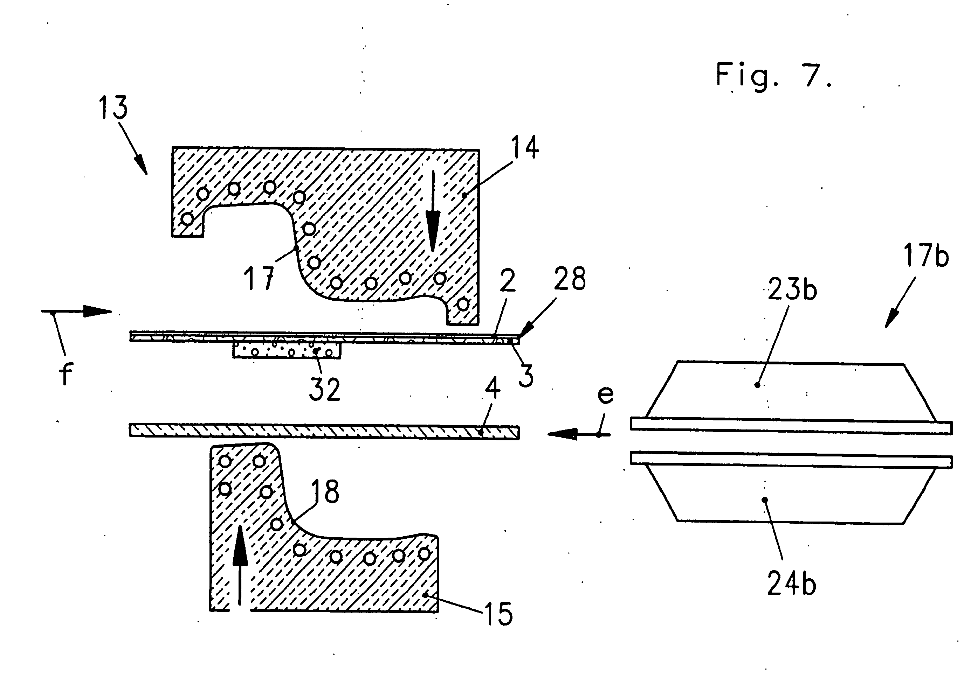

Anstelle einer Vorrichtung 12 gemäß den Fig. 3 und 4 können die erforderlichen Heizeinrichtungen, Bestückungseinrichtungen und Transporteinrichtungen auch derart angeordnet sein, daß das Trageteil 4 von der einen Seite und die Dekorschicht 2 mit der Schaumstoffschicht 3 und dem Rohling 32 für den Schaumstoffzuschnitt 6 von einer anderen Seite in das Presswerkzeug 13 b gemäß Fig. 7 transportiert werden. Grundsätzlich gleiche Teile dieser Vorrichtung 12b weisen wiederum dieselben Bezugszahlen und zusätzlich den Buchstabenindex b auf.

Wie Fig. 7 zeigt, befindet sich eine aus Oberteil 23 b und Unterteil 24b bestehende Heizeinrichtung 17b für die Trageschicht 4 auf der einen Seite des Presswerkzeuges 13. Die ausreichend erwärmte Trageschicht 4 wird mit Hilfe einer in Fig. 7 nicht näher dargestellten Transporteinrichtung entsprechend dem Pfeil e in das Presswerkzeug 13 transportiert und dort von einem ebenfalls nicht dargestellten Spannrahmen gehalten.

Von einer anderen Seite werden die bereits aneinander kaschierten, das Sandwich-Paket 28 bildende Dekorschicht 2, Schaumstoffschicht 3 und Rohling 32 für den Schaumstoffzuschnitt 6 zum Beispiel in Richtung des Pfeiles f in das Presswerkzeug 13 transportiert und dann dort ebenfalls mit Hilfe eines Spannrahmens gehalten. Die Trageschicht 4 und das Sandwich-Paket 28 befinden sich gemäß Fig. 7 zunächst in einem deutlichen Abstand voneinander.

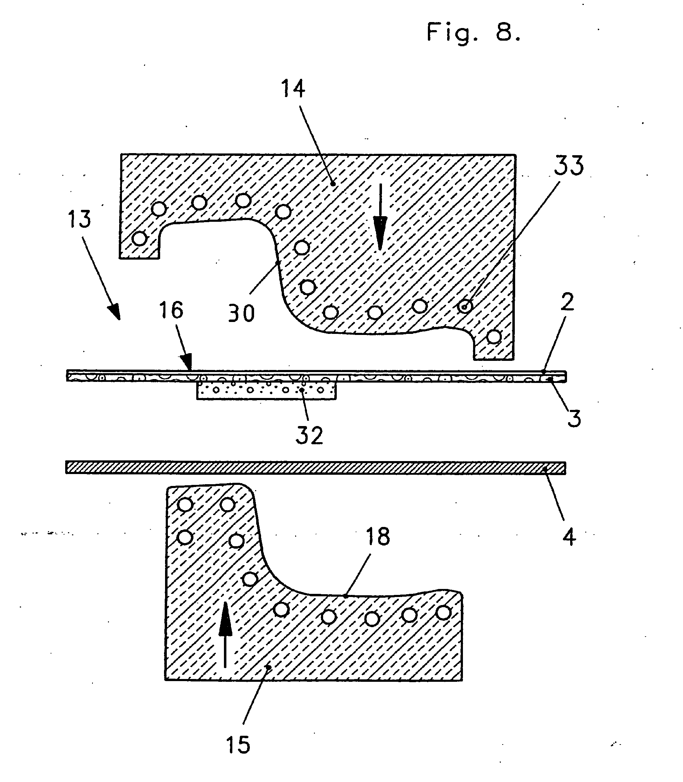

Sobald sich die Oberform 14 und die Unterform 15 des Presswerkzeuges aus der geöffneten Stellung gemäß den Fig. 7 und 8 in die Schließstellung (Fig. 6) bewegt haben, nehmen sie mit dem zwischen ihnen befindlichen Sandwich-Paket 28 die in Fig. 6 dargestellte Lage ein. Ferner verformen sich jetzt alle Teile des Sandwich-Paketes 28 wiederum in gleicher Weise wie dies oben in Verbindung mit den Fig. 5 und 6 beschrieben worden ist.

Um ein Innenverkleidungsteil 1a gemäß Fig. 2 zu erhalten, ist es lediglich notwendig, in den in den Fig. dargestellten Unterformen 15 eine geeignete Ausnehmung 35 vorzusehen, die lediglich in Fig. 5 gestrichelt dargestellt ist. Beim Schließen von Oberform 14 und Unterform 15 des Presswerkzeuges 13 wird die aufgrund der starken Erwärmung leicht verformbare Trageschicht 4 von der eine ausreichende Steifigkeit und Festigkeit besitzenden Schaumstoffschicht 3 in Verbindung mit dem Rohling 23 des Schaumstoffzuschnittes 6 in die Ausnehmung 35 gedrückt und erhält dabei im Bereich 5a die in Fig. 2 dargestellte Form.

## Patentansprüche

1. Verfahren zum Herstellen von mehrlagigen, thermoplastischen Kunststoff aufweisenden Verkleidungsteilen, insbesondere von Innenverkleidungsteilen (1) für Kraftfahrzeuge, mit jeweils mindestens einer Trageschicht (4), einer Dekorschicht (2) und einer aus thermoplastischem Kunststoff bestehenden Schaumstoffschicht (3), die partiell mindestens einen Bereich (5) mit größerer Weichheit und/oder Stoß-Absorptionsfähigkeit bzw. Materialstärke aufweist, der mit mindestens einem Randteil (7, 7a; 8, 8a) in das Niveau der eine gleichmäßige Dick aufweisenden Schaumstoffschicht (3) allmählich übergeht,
wobei zur Bildung des Bereiches (5) mit größerer Materialstärke zunächst ein aus thermoplastischem Kunststoff bestehender Rohling (32) für einen Schaumstoffzuschnitt (6) zusätzlich auf der Schaumstoffschicht (3) fixiert wird und dass Druck und Wärme zum Verformen der Teile und zum Umformen des Rohlings mit mindestens einem allmählich auslaufenden Randteil (7, 7a; 8, 8a) und zum thermoplastischen Verbinden der Schaumstoffschicht (3) und des Schaumstoffzuschnitts (6) mit der Trageschicht (4) verwendet wird,
**dadurch gekennzeichnet,**
**dass** die Wärme ausschließlich mithilfe der zuvor erwärmten Trageschicht (4) zugeführt wird und dass der Rohling (32) eine im Querschnitt rechteckige Kontur besitzt.

2. Verfahren nach Anspruch 1,
**dadurch gekennzeichnet,**
**dass** die Schaumstoffschicht (3) und der SchaumstofFzuschnitt (6) aus Polyolephinschaum bestehen, wobei die Schaumstoffschicht (3) eine höhere Temperaturbeständigkeit und/oder eine höhere Raumdichte als der Schaumstoffzuschnitt (6) aufweist.

3. Verfahren nach Anspruch 1 und 2
**dadurch gekennzeichnet,**
**dass** als Polyolefinschaum ein Polyethylenschaum und/oder ein Polypropylenschaum und/oder eine Mischung davon verwendet wird.

4. Verfahren nach Anspruch 1
**dadurch gekennzeichnet,**
**dass** die Dekorschicht (2) zunächst mit der weichelastischen Schaumstoffschicht (3) zusammenkaschiert wird und dass diese als Träger für den als Schaumstoffzuschnitt (6) vorgesehenen Rohling (32) beim Zuführen zwischen die Oberform (14) und die Unterform (15) eines Presswerkzeuges (13) verwendet wird.

5. Verfahren nach Anspruch 1,
**dadurch gekennzeichnet,**
**dass** die Dekorschicht (2) zusammen mit der ankaschierten Schaumstoffschicht (3) und dem Schaumstoffzuschnitt (6) einerseits und die ausreichend erwärmte Trageschicht (4) andererseits zunächst im Abstand voneinander zwischen der Oberform (14) und der Unterform (15) des Presswerkzeuges (13) gehalten werden, ehe das nicht erwärmte Presswerkzeug (13) schließt und die Teile durch Druck und Wärme allein aus der erwärmten Trageschicht (4) miteinander verbunden werden, wobei zugleich mindestens ein Randbereich (7, 8; 7a, 8a) des weichelastischen Rohlings (32) in Gestalt des Schaumstoffzuschnittes (6) im Querschnitt spitzwinkelig auslaufend im Presswerkzeug (13) thermoplastisch verformt wird.

6. Verfahren nach Anspruch 1,
**dadurch gekennzeichnet,**
**dass** eine Trageschicht (4) verwendet wird, die Naturfasern und thermoplastischen Kunststoff als Bindemittel enthält.

7. Verfahren nach Anspruch 1,
**dadurch gekennzeichnet**
**dass** für den Schaumstoffzuschnitt (6) ein Rohling (32) verwendet wird, der eine gleichmäßige Materialstärke aufweist.

8. Verfahren nach Anspruch 1,
**dadurch gekennzeichnet,**
**dass** die Trageschicht (4) außerhalb des Presswerkzeuges (13) erwärmt wird.

## Claims

1. Method of producing multilayer trim components comprising thermoplastic plastics, particularly internal trim components (1) for motor vehicles, each having at least one carrier layer (4), a decorative layer (2) and a foam layer (3) consisting of thermoplastic plastics, which has in part at least one region (5) of greater softness and/or shock absorbing capacity or material thickness, which gradually merges, by means of at least one edge portion (7, 7a; 8, 8a), into the level of the foam layer (3) which is of uniform thickness,
wherein in order to form the region (5) of greater material thickness first a blank (32) for a pre-cut foam part (6) consisting of thermoplastic plastics is additionally fixed to the foam layer (3) and pressure and heat are used to deform the parts and to reshape the blank with at least one gradually terminating edge portion (7, 7a; 8, 8a) and to connect the foam layer (3) and pre-cut foam piece (6) thermoplastically to the carrier layer (4),
**characterised in that**
the heat is supplied exclusively by means of the previously heated carrier layer (4) and the blank (32) has a contour that is rectangular in cross-section.

2. Method according to claim 1, **characterised in that** the foam layer (3) and the pre-cut foam piece (6) consist of polyolefin foam, the foam layer (3) having a higher temperature resistance and/or a higher spatial density than the pre-cut foam piece (6).

3. Method according to claims 1 and 2, **characterised in that** a polyethylene foam and/or a polypropylene foam and/or a mixture thereof is used as the polyolefin foam.

4. Method according to claim 1, **characterised in that** the decorative layer (2) is first laminated together with the soft elastic foam layer (3) and this is used as the carrier for the blank (32) provided in the form of a pre-cut foam piece (6), for insertion between the upper die (14) and lower die (15) of a pressing tool (13).

5. Method according to claim 1, **characterised in that** the decorative layer (2) together with the foam layer (3) laminated thereto and the pre-cut foam piece (6), on the one hand, and the adequately heated carrier layer (4), on the other hand, are initially held at a spacing from one another between the upper die (14) and the lower die (15) of the pressing tool (13), before the unheated pressing tool (13) closes and the parts are joined together by pressure and heat solely from the heated carrier layer (4), while at the same time at least one edge region (7, 8; 7a, 8a) of the soft elastic blank (32) in the form of the pre-cut foam piece (6) terminating in an acute angle in cross-section is thermoplastically deformed in the pressing tool (13).

6. Method according to claim 1, **characterised in that** a carrier layer (4) is used which contains natural fibres and thermoplastic plastics as binding agent.

7. Method according to claim 1, **characterised in that** a blank (32) which has a uniform material thickness is used for the pre-cut foam piece (6).

8. Method according to claim 1, **characterised in that** the carrier layer (4) is heated outside the pressing tool (13).

## Revendications

1. Procédé de fabrication d'éléments de revêtement multicouches, en matière synthétique thermoplastique, en particulier d'éléments de revêtement intérieurs (1) pour des véhicules automobiles, avec chaque fois au moins une couche support (4), une couche de décoration (2) et une couche de matériau alvéolaire (3), composée de matière synthétique thermoplastique, présentant au moins une zone (5) à plus grande souplesse et/ou capacité d'absorption des chocs ou épaisseur de matériau, se transformant progressivement, avec au moins une partie de bordure (7, 7a ; 8, 8a) en le niveau de la couche de matériau alvéolaire (3) présentant une épaisseur régulière,
où, pour former la zone (5) ayant une plus grande épaisseur de matériau, une ébauche (32) composée de matière synthétique thermoplastique, pour un flan en matériau alvéolaire (6), est en plus fixée sur la couche de matériau alvéolaire (3), et en ce que de la pression et de la chaleur sont utilisées pour déformer les pièces et pour reformer l'ébauche avec au moins une partie de bordure (7, 7a ; 8, 8a) évoluant progressivement et pour assurer une liaison thermoplastique de la couche de matériau alvéolaire (3) et du flan de matériau alvéolaire (6) à la couche support (4), **caractérisé en ce que** la chaleur est amenée exclusivement à l'aide de la couche support (4) chauffée préalablement, et **en ce que** l'ébauche (32) comprend un contour à section transversale rectangulaire.

2. Procédé selon la revendication 1, **caractérisé en ce que** la couche de matériau alvéolaire (3) et le flan de matériau alvéolaire (6) sont composés de mousse de polyoléfine, la couche de matériau alvéolaire (3) présentant une plus grande résistance à la température et/ou une plus grande densité apparente que le flan de matériau alvéolaire (6).

3. Procédé selon les revendications 1 et 2, **caractérisé en ce que** l'on utilise comme mousse de polyoléfine une mousse de polyéthylène et/ou une mousse de polypropylène et/ou un mélange de celles-ci.

4. Procédé selon la revendication 1, **caractérisé en ce que** la couche de décoration (2) est d'abord scellée à la couche de matériau alvéolaire (3) élastiquement souple, et **en ce que** celle-ci est utilisée comme support pour l'ébauche (32) prévue sous forme de flan de matériau alvéolaire (6), lors de l'amenée entre le moule supérieur (14) et le moule inférieur (15) d'un outil de pressage (13).

5. Procédé selon la revendication 1, **caractérisé en ce que** la couche de décoration (2), conjointement avec la couche de matériau alvéolaire (3) scellée contre et le flan de matériau alvéolaire (6), d'une part, et la couche support (4) suffisamment chauffée, d'autre part, sont d'abord maintenues à distance les une des autres, entre le moule supérieur (14) et le moule inférieur (15) de l'outil de pressage (13), avant que l'outil de pressage (13) non chauffé se ferme et les pièces sont reliées ensemble, par utilisation de pression et de chaleur provenant uniquement de la couche support (4) chauffée, sachant que, en même temps, au moins une zone de bordure (7, 8 ; 7a, 8a) de l'ébauche (32) élastiquement souple est soumise à une déformation thermoplastique épousant la forme du flan de matériau alvéolaire (6), avec une évolution rectangulaire de la section transversale, dans l'outil de pressage (13).

6. Procédé selon la revendication 1, **caractérisé en ce qu'**on utilise une couche support (4), contenant des fibres naturelles et une matière synthétique thermoplastique comme liant.

7. Procédé selon la revendication 1, **caractérisé en ce qu'**on utilise pour le flan de matériau alvéolaire (6) une ébauche (32) présentant une épaisseur de matériau régulière.

8. Procédé selon la revendication 1, **caractérisé en ce que** la couche support (4) est chauffée à l'extérieur de l'outil de pressage (13).
